Europäisches Patentamt

European Patent Office

Office européen des brevets

(19)

(11) EP 0 674 197 B1

(12) **FASCICULE DE BREVET EUROPEEN**

(45) Date de publication et mention
de la délivrance du brevet:
**21.07.1999 Bulletin 1999/29**

(51) Int Cl.$^6$: **G02B 6/38**

(21) Numéro de dépôt: **95400646.6**

(22) Date de dépôt: **23.03.1995**

(54) **Procédé de réalisation d'un élément de raccordement à une fibre multicoeurs**

Verfahren zur Herstellung eines Bauteils zum Anschluss an eine Mehrkernfaser

Process of fabrication of a component for interconnection with a multicore fibre

(84) Etats contractants désignés:
**DE FR GB**

(30) Priorité: **24.03.1994 FR 9403466**

(43) Date de publication de la demande:
**27.09.1995 Bulletin 1995/39**

(73) Titulaire: **FRANCE TELECOM**
**75015 Paris (FR)**

(72) Inventeurs:
• **Boscher, Daniel**
**F-22560 Trebeurden (FR)**
• **Brault, Jean-Charles**
**F-22560 Trebeurden (FR)**

• **Landouar, Jean-Michel**
**F-22300 Locquemeau (FR)**

(74) Mandataire: **Martin, Jean-Jacques**
**Cabinet REGIMBEAU**
**26, Avenue Kléber**
**75116 Paris (FR)**

(56) Documents cités:
**EP-A- 0 107 989**      **EP-A- 0 137 501**
**DE-A- 4 202 931**      **US-A- 4 730 891**

• **Proceedings of the 28th International Wire and Cable Symposium, Novembre 1978, pages 370-384**

**Description**

La présente invention est relative à un procédé pour la réalisation d'un élément pour le raccordement de plusieurs fibres optiques élémentaires sur une fibre optique multicoeurs.

Les fibres optiques multicoeurs sont des guides d'ondes optiques comportant dans une même matrice linéaire une pluralité de coeurs de guidage parallèles.

Il a notamment récemment été proposé dans la demande de brevet français déposée sous le numéro 93-01674 un guide optique présentant, dans une même matrice, une pluralité de coeurs, chacun entouré par une gaine optique. Les axes de ces coeurs sont disposés dans la matrice de façon à présenter entre eux des relations géométriques de grande précision, les positions respectives des axes des coeurs étant définies à quelques dixièmes de micromètres près.

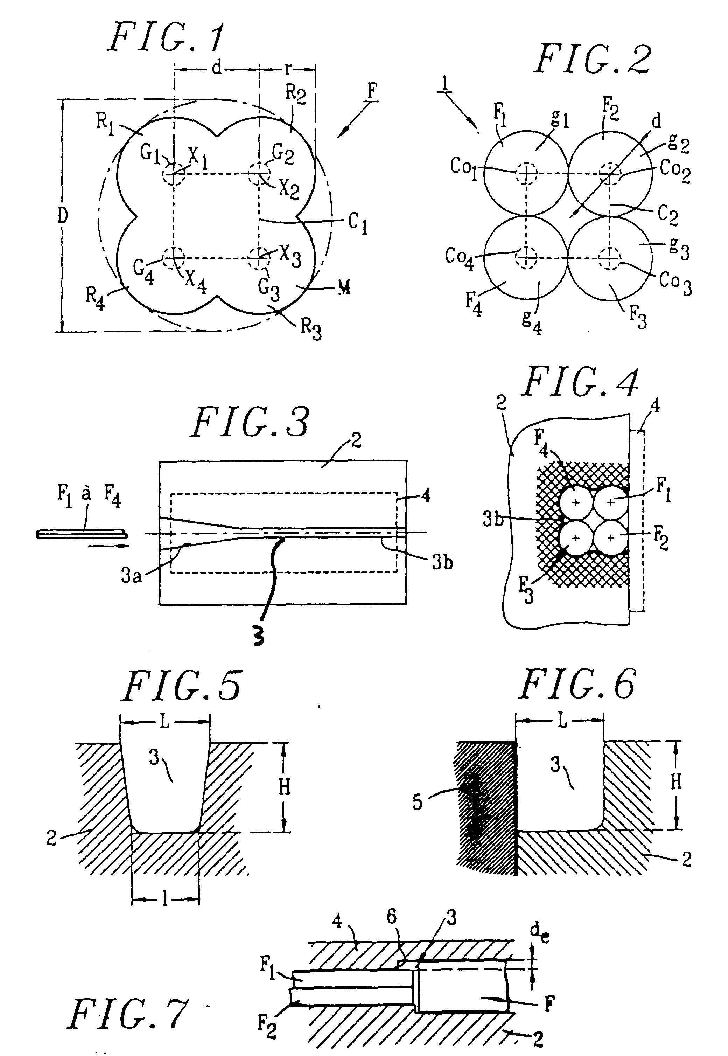

On a représenté sur la figure 1 un exemple d'une fibre optique F de ce type. Cette fibre F comporte, dans une matrice M, quatre guides optiques élémentaires $G_1$ à $G_4$ dont les axes $X_1$ à $X_4$ forment, en coupe transversale, les sommets d'un carré $C_1$ de grande précision. Les contours de la matrice M sont définis par quatre portions identiques $R_1$ à $R_4$ de cylindres de révolution, dont les axes coïncident respectivement avec les axes $X_1$ à $X_4$ des guides optiques élémentaires.

Cette fibre multicoeur F est par exemple de diamètre D extérieur maximal égal à 125 µm, la largeur d du carré $C_1$ étant de 44,19 µm, le rayon r des arcs de cylindres $R_1$ à $R_4$ étant égal à 31,25 µm.

Après une utilisation jusqu'à présent principalement réservée aux transmissions longue distance et aux réseaux interurbains et intercentraux, la fibre optique va de plus en plus être utilisée dans des réseaux de distribution avec des terminaisons dans des chambres de distribution, dans les locaux d'immeuble, et à terme chez l'abonné. Le volume de clients concernés devenant de plus en plus grand, l'aspect économique global du réseau prend une importance capitale.

Deux types d'architectures sont envisageables :

- une architecture du type à partage dans laquelle, par l'intermédiaire de multiplexeurs, coupleurs, séparateurs, on utilise un seul canal descendant pour de multiples abonnés, en faisant partager le coût de l'émission, des composants, et de la fibre câblée, par le nombre d'abonnés desservis par cette seule fibre ;

- une architecture utilisant des fibres multicoeurs, où n guides relient n abonnés, et qui permet de faire l'économie des composants multiplexeurs, coupleurs et séparateurs, qui sont relativement onéreux.

Les coûts de câblage, de pose, et de génie civil étant prépondérants dans les calculs de coûts actuels, on s'oriente désormais vers ce deuxième type d'architecture, c'est-à-dire vers des réseaux à fibres multicoeurs.

On connaît déjà par EP 137 501 un composant pour raccorder une fibre optique multicoeurs avec une pluralité de fibres optiques élémentaires.

On connaît également par "High Density Muticore-Fiber Cable" S. Inao, T. Sato, H. Hondo, M. Ogai, S. Sentsui, A. Otake, K. Yoshizaki, K. Ishihara, N. Ushida, Proceedings of 28th Intern. Wire and Cable Symposium, November 1978, pages 370-384, un composant de raccordement optique qui comprend plusieurs fibres optiques comportant chacune au moins un coeur de guidage entouré par une gaine optique, ces fibres étant réunies à une extrémité commune de façon que leurs gaines optiques soient tangentes entre elles et que les axes de leurs coeurs soient disposés selon une géométrie correspondant à celle des axes d'une fibre multicoeur à laquelle cette extrémité commune doit être connectée, lesdites fibres étant libres les unes par rapport aux autres à leurs extrémités opposées.

L'invention propose un procédé pour la réalisation d'un tel élément de raccordement, tel que défini à la revendication 1.

D'autres caractéristiques et avantages de l'invention ressortiront encore de la description qui suit.

Cette description est purement illustrative et non limitative. Elle doit être lue en regard des dessins annexés sur lesquels :

. la figure 1 a déjà été commentée et représente en coupe transversale une fibre à quatre coeurs ;

. la figure 2 représente, également en coupe transversale, l'extrémité d'un élément de raccordement tel que réalisable par le procédé de l'invention, destinée à être connectée à la fibre à quatre coeurs de la figure 1 ;

. la figure 3 et la figure 4 sont des vues de dessus et en coupe transversale de moyens utilisés dans un mode de mise en oeuvre du procédé conforme à l'invention ;

. la figure 5 et la figure 6 représentent des vues en coupe transversale de deux types de rainures pouvant être mises en oeuvre dans le procédé des figures 3 et 4 ;

. la figure 7 est une vue en coupe longitudinale illustrant l'épissure entre une fibre multicoeur et un élément de raccordement, mise en oeuvre dans une variante possible du procédé des figures 3 et 4.

L'élément 1 de raccordement représenté en coupe sur la figure 2 permet d'éclater la fibre multicoeur F de la figure 1 pour aller distribuer quatre abonnés avec quatre fibres élémentaires.

Cet élément 1 comporte quatre fibres élémentaires $F_1$ à $F_4$ assemblées à une extrémité commune de façon :

- que leurs coeurs (référencés sur la figure 2 par $Co_1$ à $Co_4$) soient disposés, à cette extrémité, selon la même géométrie que les coeurs de la fibre multicoeur F de la figure 1, c'est-à-dire selon un carré $C_2$ de grande précision de 44,19 µm de côté ;
- que leurs gaines optiques (référencées sur la figure 2 par $g_1$ à $g_4$) soient tangentes entre elles.

A leurs autres extrémités, les fibres $F_1$ à $F_4$ sont indépendantes les unes des autres.

Un tel élément 1 est destiné à être connecté à la fibre multicoeur F par son extrémité où les fibres $F_1$ à $F_4$ sont assemblées. A leurs extrémités opposées, les fibres $F_1$ à $F_4$ peuvent être reliées, par des moyens de connectiques classiques, à des fibres élémentaires.

L'élément 1 présente en outre à son extrémité par laquelle il est destiné à être connecté à la fibre multicoeur F, un support (non représenté sur la figure 2) qui permet sa manipulation.

Le diamètre d des gaines optiques $g_1$ à $g_4$, à l'extrémité commune des fibres $F_1$ à $F_4$, est imposé par la géométrie carrée des coeurs $Co_1$ à $Co_4$ et est égal à 44,19 µm.

Ce diamètre de 44,19 µm peut être obtenu directement par fibrage.

Il peut également être obtenu à partir de fibres classiques de 125 µm de diamètre, traitées par abrasion ou attaque chimique.

Un exemple d'attaque chimique est, pour des fibres en silice, une attaque par trempage dans un bain d'acide fluorhydrique à 40 % de concentration. En sortie du bain, les extrémités traitées présentent une forme cylindrique dont le diamètre est fonction, à une température donnée, du temps de trempage. D'autres concentrations d'acide fluorhydrique sont bien entendu possibles.

On se réfère maintenant aux figures 3 à 7 illustrant une variante de mise en oeuvre du procédé conforme à l'invention.

Dans cette variante, on utilise une pièce 2 en élastomère présentant une rainure 3 de précision. Une telle pièce 2 est habituellement utilisée pour épissurer deux fibres optiques élémentaires.

La rainure 3 présente une partie centrale 3b de section en U de grande précision et une entrée évasée 3a par laquelle les fibres $F_1$ à $F_4$ sont introduites et guidées sur la rainure centrale 3b.

Un adhésif polymérisable aux ultraviolets est préalablement déposé dans la rainure 3.

Puis, la rainure 3 est fermée par une lame de verre 4, que l'on fait porter par la partie supérieure de la pièce 2 en élastomère.

L'introduction des fibres $F_1$ à $F_4$ est ensuite réalisée globalement et sous contrôle monoculaire.

Une fois les quatre fibres $F_1$ à $F_4$ introduites, on polymérise l'adhésif en le soumettant à un rayonnement ultraviolet.

Les quatre fibres $F_1$ à $F_4$ sont alors collées sur la lame de verre 4.

Après démoulage de l'ensemble, on consolide en enrobant les quatre fibres $F_1$ à $F_4$, avec de la colle ou de la résine bicomposant.

La plaque de verre 4 est ensuite sciée de façon à obtenir pour les fibres $F_1$ à $F_4$ des extrémités préparées.

On a représenté sur les figures 5 et 6 deux types de géométries possibles pour la rainure 3.

Sur la figure 5, la rainure 3 est entièrement ménagée dans une pièce 2 monobloc en élastomère mou et s'évase légèrement de son fond vers son ouverture. La hauteur H et l'ouverture supérieure L de la rainure 2 sont choisies en fonction du matériau de la pièce 2 et du type de fibres utilisées, de façon à assurer sur lesdites fibres $F_1$ à $F_4$ la compression d'assemblage nécessaire. Typiquement :

$$L = 0{,}85 \times 2d$$

et

$$H = 0{,}7 \times 2d = 1,$$

où 1 est la largeur du fond de la rainure 3 et d le diamètre des fibres.

En variante, ainsi qu'on l'a illustré sur la figure 6, la rainure 3 n'est pas définie dans une pièce monobloc : la pièce 2 en élastomère mou présente une encoche latérale de section en L, qui définit le fond et l'une des faces latérales de la rainure 3, l'autre des faces latérales de la rainure 3 étant définie par une plaque 5 en élastomère dur appliquée sur la pièce 2 en élastomère mou, de façon rigoureusement perpendiculaire à la lame de verre 4.

Typiquement, on choisit la hauteur H et la largeur L telles que :

$$L=H=0{,}7 \times 2d.$$

L'élément 1 ainsi obtenu peut ensuite être relié par des moyens classiques de connectique à la fibre multicoeur F.

La lame de verre 4 sert alors de référence de plaquage des fibres $F_1$ à $F_4$.

En variante, ainsi qu'on la illustré sur la figure 7, les fibres $F_1$ à $F_4$ peuvent directement être connectées à la fibre multicoeur F par épissure dans la rainure 3. A cet effet, la fibre multicoeur F est enfilée, en même temps que les fibres $F_1$ à $F_4$, dans la rainure 3, par l'autre extrémité de celle-ci. L'adhésif est polymérisé lorsque les fibres $F_1$ à $F_4$ et la fibre F sont toutes en place dans la rainure 2.

La différence de dimensions géométriques externes entre les fibres $F_1$ à $F_4$ et la fibre muticoeur F est rattrapée par un décrochement 6 de hauteur $d_e$ égal à r-d/2 - c'est-à-dire de 9,15 µm - que présente la lame de verre 4 en son milieu. La fibre multicoeur F et les fibres $F_1$ à $F_4$, repoussées élastiquement par le fond de la rainure 3, viennent en appui sur la lame 4 de part et d'autre de ce décrochement 6.

A titre d'exemple, ce décrochement 6 peut être obtenu par attaque chimique contrôlée d'une lame de verre plate, notamment par attaque à l'acide fluorhydrique à 48 %, pendant 25 secondes, ou à l'acide fluorhydrique dilué, pendant plusieurs minutes.

En variante, il est également possible de faire subir à la fibre multicoeur une attaque chimique. Un décrochement sur la lame externe n'est alors plus nécessaire.

Le mode de mise en oeuvre du procédé selon l'invention qui vient d'être décrit présente notamment les avantages suivants :

- coût de matériel quasi négligeable, puisqu'une même pièce en élastomère peut servir de nombreuses fois,
- temps de réalisation unitaire très court.

L'invention a été décrite dans le cas d'un raccordement à une fibre à quatre coeurs. Elle s'applique, bien entendu, de la même façon à des raccordements à des fibres n coeurs, et en particulier à des raccordements à des fibres multicoeurs, présentant neuf coeurs répartis en carré (3 fois 3).

## Revendications

1. Procédé pour la réalisation d'un élément de raccordement optique (1) entre une fibre optique multicoeurs (F) et une pluralité de fibres optiques individuelles, du type comprenant plusieurs fibres optiques (F1 à F4;) comportant chacune au moins un coeur optique (Co1 à Co4) entouré par une gaine optique (g1 à g4), ces fibres étant réunies les unes contre les autres et fixées latéralement les unes aux autres dans une portion d'extrémité commune de façon telle que les gaines optiques adjacentes sont tangentes entre elles, et ces fibres présentant dans leur face d'extrémité commune un diamètre présélectionné de façon telle que les axes de leurs coeurs sont disposés selon une géométrie correspondant à celle des axes des coeurs de ladite fibre multicoeurs. (F) à laquelle leur extrémité commune doit être connectée, l'ensemble desdites fibres ainsi fixées les unes aux autres dans leur portion d'extrémité commune étant également fixées à un support (2 ; 10a, 10b ; 23) présentant au moins une face de référence (14a, 14b; 24) permettant de positionner cette portion d'extrémité commune selon au moins une direction de l'espace, lesdites fibres étant libres les unes par rapport aux autres à leurs extrémités opposées pour pouvoir être connectées auxdites fibres individuelles, ledit procédé consistant en ce que:

- on introduit les fibres (F1 à F4) dans une rainure (3) de section en U ménagée, au moins en partie, dans une pièce (2) en un matériau élastomère mou, la section transversale de la rainure (3) en U étant telle que les fibres, repoussées par l'élasticité de la pièce (2), se rassemblent les unes contre les autres cependant que leurs gaines optiques se positionnent de façon que les fibres adjacentes sont tangentes entre elles et de façon que les coeurs soient disposés selon la géométrie précitée,
- on ferme l'ouverture supérieure de la rainure au moyen d'un support de référence (4),
- on fixe lesdites fibres (F1 à F4) entres elles et audit support (4), et
- on démoule de la rainure (3) les fibres (F1 à F4) et le support (4) ainsi fixés ensemble.

2. Procédé selon la revendication 1, selon lequel

. on introduit dans la rainure (3), en même temps que les fibres ($F_1$ à $F_4$), une fibre multicoeurs, de façon qu'elle prolonge lesdites fibres ($F_1$ à $F_4$) dans ladite rainure (3), cette rainure étant d'une forme telle que ladite fibre multicoeurs (F) s'y positionne de façon que les axes de ses coeurs coïncident avec les axes des coeurs ($Co_1$ à $Co_4$) des fibres ($F_1$ à $F_4$) rassemblées les unes contre les autres dans la rainure, et
. on fixe audit support (4) lesdites fibres ($F_1$ à $F_4$) et la fibre multicoeurs (F).

3. Procédé selon la revendication 2, selon lequel la face du support de référence (4) en regard du fond de la rainure (3) présente un décrochement (6) pour compenser des différences de dimensions externes entre la fibre multicoeur (F) et les fibres ($F_1$ à $F_4$) rassemblées.

4. Procédé selon l'une des revendications précédentes, selon lequel une face latérale de la rainure (3) est définie par une seconde pièce (5) en un élastomère dur, ladite seconde pièce (5) venant en appui sur ladite première pièce (2) en élastomère mou qui présente une encoche en L définissant le fond et l'autre face latérale de la rainure en U.

5. Procédé selon l'une des revendications précédentes, selon lequel la rainure (3) est évasée de son fond vers son ouverture supérieure.

## Patentansprüche

1. Verfahren für die Herstellung eines optisches Anschlußelementes (1) zwischen einer optischer Mehrkernfaser (F) und einer Mehrzahl von einzelnen optischen Fasern von einer Art, die mehrere optische Fasern ($F_1$ bis $F_4$) enthält, die jeweils mindestens einen optischen Kern ($Co_1$ bis $Co_4$) enthalten, der von einem optischen Mantel (g1 bis g4) umhüllt ist, wobei diese Fasern an einem gemeinsamen Endabschnitt so zusammengefaßt und in seitlicher Richtung aneinander befestigt sind, daß sich die benachbarten optischen Ummantelungen untereinander tangieren und diese Fasern an ihrem gemeinsamen Endabschnitt einen bestimmten Durchmesser haben, der so gewählt ist, daß die Achsen ihrer Kerne in einer Geometrie angeordnet sind, welche der Geometrie der Achsen der Kerne der Mehrkernfaser (F) entspricht, an die ihr gemeinsames Ende angeschlossen werden soll, wobei alle diese Fasern, die auf diese Weise an ihrem Endabschnitt miteinander befestigt sind, ebenfalls an einem Träger (2; 10a; 10b; 23) befestigt sind, welcher mindestens eine Referenzfläche (14a, 14b; 24) aufweist, die es erlaubt, diesen gemeinsamen Endabschnitt in mindestens einer räumlichen Richtung zu positionieren, wobei diese Fasern an ihrem anderen Endabschnitt untereinander frei sind, damit sie an diese einzelnen Fasern angeschlossen werden können
**dadurch gekennzeichnet, daß**
dieses Verfahren folgende Schritte umfaßt

   - die Fasern ($F_1$ bis $F_4$) werden in eine Hohlkehle (3) mit einem U-förmigen Querschnitt eingelegt, der mindestens teilweise in ein Teil (2) aus einem weichen Elastomer eingebracht ist, wobei der Querschnitt der U-förmigen Hohlkehle (3) so beschaffen ist, daß sich die durch die Elastizität des Teils (2) zurückgedrückten Fasern miteinander verbinden, während sich ihre optischen Ummantelungen so positionieren, daß sich die benachbarten Fasern untereinander so tangieren, daß die Kerne in der vorgenannten Geometrie angeordnet sind,
   - die Oberseite der Hohlkehle mittels eines Referenzträgers (4) verschlossen wird, und
   - diese Fasern ($F_1$ bis $F_4$) miteinander an dem Träger (4) befestigt werden, und
   - die Fasern ($F_1$ bis $F_4$) zusammen mit dem Träger (4), an dem sie befestigt sind, aus der Hohlkehle (3) herausgelöst werden.

2. Verfahren nach Anspruch 1,
**dadurch gekennzeichnet, daß**
zusammen mit den Fasern ($F_1$ bis $F_4$) gleichzeitig eine Mehrkernfaser (F) in die Hohlkehle (3) so eingelegt wird, daß sie die Fasern ($F_1$ bis $F_4$) in dieser Hohlkehle (3) verlängert, wobei diese Hohlkehle eine Form hat, die so beschaffen ist, daß sich diese Mehrkernfaser (F) so positionieren kann, daß die Achsen ihrer Kerne mit den Achsen der Kerne ($Co_1$ bis $Co_4$) der Fasern ($F_1$ bis $F_4$) zusammenfallen, die nebeneinander in der Hohlkehle angeordnet sind, und die Fasern ($F_1$ bis $F_4$) und die Mehrkernfaser (F) an dem Träger (4) befestigt werden.

3. Verfahren nach Anspruch 2,
**dadurch gekennzeichnet, daß**
die Fläche des Referenzträgers (4), welche gegenüber dem Grund der Hohlkehle (3) angeordnet ist, eine Abstufung (6) aufweist, um die Unterschiede in den äußeren Abmessungen zwischen der Mehrkernfaser (F) und den zusammengefügten Fasern ($F_1$ bis $F_4$) auszugleichen.

4. Verfahren nach einem der vorausgegangenen Ansprüche,
**dadurch gekennzeichnet, daß**
eine Seitenwand der Hohlkehle (3) durch ein zweites Teil (5) aus einem harten Elastomer gebildet wird, und daß dieses zweite Teil an dem ersten Teil (2) aus einem weichen Elastomer anliegt, das eine L-förmige Kerbe aufweist, welche den Grund und die andere Seitenwand der U-förmigen Hohlkehle bildet.

5. Verfahren nach einem der vorausgegangenen Ansprüche,
**dadurch gekennzeichnet, daß**
sich die Hohlkehle (3) zwischen ihrem Grund und ihrer oberen Öffnung aufweitet.

## Claims

1. A method of making an optical connection element (1) for connecting a multi-core optical fiber (F) to a plurality of individual optical fibers, the component being of the type comprising a plurality of optical fibers ($F_1$ to $F_4$), each of which has at least one optical core ($Co_1$ to $Co_4$) surrounded by its own optical cladding ($g_1$ to $g_4$), the fibers being brought together and fixed laterally to one another in a common end portion in a manner such that the adjacent optical claddings are mutually tangential, and the fibers having, in their common end face, a diameter preselected in a manner such that the axes of their cores are disposed in a geometrical configuration corresponding to that of the axes of the cores of said multi-core fiber (F) to which their common end is to be connected, the resulting assembly of said fibers as fixed to one another in their common end portion is also fixed to a support (2; 10a, 10b; 23) having at least one reference face (14b, 14b; 24) making it possible to position said common end portion in at least one direction in space, said fibers being free from one another at their opposite ends so that they can be connected to said individual fibers, said method consisting in that:

- the fibers ($F_1$ to $F_4$) are inserted into a channel-section groove (3) at least a portion of which is provided in a part (2) made of soft elastomer, the cross-section of the channel-section groove (3) being such that the fibers are pushed back by the resilience of the part (2) so that they come together against one another while their optical claddings are positioned such that the adjacent fibers are mutually tangential and such that the cores are disposed in the above-mentioned geometrical configuration;
- the top opening of the groove is closed by means of a reference support (4);
- said fibers ($F_1$ to $F_4$) are fixed together and to said support (4); and
- the fibers ($F_1$ to $F_4$) and the support (4) as fixed together are removed from the mold.

2. A method according to claim 1, in which:

- a multi-core fiber is inserted into the groove (3) at the same time as the fibers ($F_1$ to $F_4$) so that said multi-core fiber extends said fibers ($F_1$ to $F_4$) in said groove (3), said groove being shaped such that said multi-core fiber (F) is positioned therein such that the axes of its cores coincide with respective ones of the axes of the cores ($Co_1$ to $Co_4$) of the fibers ($F_1$ to $F_4$) as brought together against one another in the groove; and
- said fibers ($F_1$ to $F_4$) and the multi-core fiber (F) are fixed to said support (4).

3. A method according to claim 2, in which the face of the reference support (4) facing the bottom of the groove (3) is provided with a set-back (6) so as to compensate for the differences between the outside dimensions of the multi-core fiber (F) and the outside dimensions of the fibers ($F_1$ to $F_4$) as assembled together.

4. A method according to any preceding claim, in which a side face of the groove (3) is defined by a second part (5) made of hard elastomer, said second part (5) coming into abutment against said first part (2) which is made of soft elastomer and which is provided with an L-shaped notch defining the bottom and the other side face of the channel-section groove.

5. A method according to any preceding claim, in which the groove (3) flares going from its bottom towards its top opening.

FIG.1

FIG.2

FIG.3

FIG.4

FIG.5

FIG.6

FIG.7